# EUROPEAN PATENT SPECIFICATION

(11) **EP 2 442 269 B1**
(45) Date of publication and mention of the grant of the patent: **30.08.2017**
(21) Application number: 10786370.6
(22) Date of filing: 09.06.2010
(51) Int. Cl.: G06Q 50/00, G06Q 10/10

(54) **METHOD FOR PROVIDING USER INFORMATION, AND DEVICE ADOPTING SAME**
VERFAHREN ZUR BEREITSTELLUNG VON BENUTZERINFORMATIONEN UND VORRICHTUNG ZUR ANWENDUNG DIESES VERFAHRENS
PROCÉDÉ ET DISPOSITIF DE MISE EN OEUVRE DE DONNÉES UTILISATEUR

(30) Priority: 09.06.2009 KR 20090050853; 14.12.2009 KR 20090124065
(43) Date of publication of application: 18.04.2012
(73) Proprietor: Samsung Electronics Co., Ltd., Suwon-si, Gyeonggi-do, 443-742 (KR)
(72) Inventor: KWAHK, Ji-young, Seongnam-si Gyeonggi-do 463-020 (KR); KWON, Giang-yoon, Seoul 134-050 (KR); JEON, Jin-young, Seoul 135-081 (KR); HWANG, Sang-woong, Yongin-si Gyeonggi-do 446-572 (KR); YOON, Jee-sun, Seoul 137-755 (KR)
(74) Representative: HGF Limited
(86) International application number: PCT/KR2010/003704
(87) International publication number: WO 2010/143887

(56) References cited:
- KR-A- 20030 038 291
- KR-A- 20040 103 021
- KR-A- 20050 043 394
- KR-A- 20060 083 501
- US-A1- 2007 242 051
- US-A1- 2007 244 970
- KRAY C ET AL: "Group coordination and negotiation through spatial proximity regions around mobile devices on augmented tabletops", HORIZONTAL INTERACTIVE HUMAN COMPUTER SYSTEMS, 2008. TABLETOP 2008. 3RD IEEE INTERNATIONAL WORKSHOP ON, IEEE, PISCATAWAY, NJ, USA, 1 October 2008 (2008-10-01), pages 1-8, XP031397784, ISBN: 978-1-4244-2897-7
- ROGERS Y ET AL: "Extending Tabletops to Support Flexible Collaborative Interactions", HORIZONTAL INTERACTIVE HUMAN-COMPUTER SYSTEMS, 2006. TABLETOP 2006. FI RST IEEE INTERNATIONAL WORKSHOP ON ADELAIDE, SOUTH AUSTRALIA 05-07 JAN. 2006, PISCATAWAY, NJ, USA,IEEE, 5 January 2006 (2006-01-05), pages 71-78, XP010882754, DOI: 10.1109/TABLETOP.2006.13 ISBN: 978-0-7695-2494-8
- AARON STAFFORD ET AL: "Implementation of god-like interaction techniques for supporting collaboration between outdoor AR and indoor tabletop users", MIXED AND AUGMENTED REALITY, 2006. ISMAR 2006. IEEE/ACM INTERNATIONAL SYMPOSIUM ON, IEEE, PI, 1 October 2006 (2006-10-01), pages 165-172, XP031014665, ISBN: 978-1-4244-0650-0
- XIN WANG ET AL: "Tabletop AgilePlanner: A tabletop-based project planning tool for agile software development teams", HORIZONTAL INTERACTIVE HUMAN COMPUTER SYSTEMS, 2008. TABLETOP 2008. 3RD IEEE INTERNATIONAL WORKSHOP ON, IEEE, PISCATAWAY, NJ, USA, 1 October 2008 (2008-10-01), pages 121-128, XP031397802, ISBN: 978-1-4244-2897-7

## Description

### TECHNICAL FIELD

The present invention related to a method of providing user information and a device adopting the method, and more particularly, to a method of providing user information to allow a user to refer to and use information about the user and information about other users and a device adopting the method.

### BACKGROUND ART

Connection among devices through a network may be ultimately regarded as connections among users who have accessed the devices connected to one another through the network. In actual, a user is more interested in a network of users of devices than a network of the devices.

One user uses one device, but several users may share one device. Also, devices may be complexly connected to one another through a network. This makes a network of users more complicated. Accordingly, a method of allowing a user to further easily check and apply a network of users even in a complicated network environment is required.

"Group Coordination and Negotiation through Spatial Proximity regions around Mobile Devices on Augmented Tabletops" by Kray et. al. , HORIZONTAL INTERACTIVE HUMAN COMPUTER SYSTEMS, 2008. TABLETOP 2008. 3RD IEEE INTERNATIONAL WORKSHOP ON, IEEE, PISCATAWAY, NJ, USA, 1 October 2008 (2008-10-01), pages 1-8, discloses a system for negotiation and coordination of a number of people engaging in group activities such as negotiations, games or the exchange of data typically involving people sitting around a table. The system uses spatial proximity regions around mobile phones placed on an ordinary table to trigger particular actions in response to other devices entering these regions, leaving them, or staying within them for a certain amount of time. These changes in the spatial configuration of mobile devices can then be mapped to application-specific functions such as accepting a proposed date or transferring an image.

"Tabletop AgilePlanner: A Tabletop-Based Project Planning Tool for Agile Software Development Teams" by Wang and Maurer HORIZONTAL INTERACTIVE HUMAN COMPUTER SYSTEMS. 2008. TABLETOP 2008. 3RD IEEE INTERNATIONAL WORKSHOP ON. IEEE. PISCATAWAY. NJ. USA. 1 October 2008 (2008-10-01). Pages 121-128 discloses a "tabletop AgilePlanner" for planning meetings. In this system a virtual meeting surface is set up to show a real-time scenario highlighting story cards that are currently the focus of discussion on an orientation-independent workspace. The electronic story cards emulate paper artefacts that are used in traditional pen-paper based meetings. The system uses four cameras placed on each corner of a table surface.

"Implementation of God-Like interaction Techniques for supporting Collaboration between Outdoor AR and indoor Tabletop Users" by Stafford et.al. MIXED AND AUGMENTED REALITY, 2006. ISMAR 2006. IEEE/ACM INTERNATIONAL SYMPOSIUM ON, IEEE, PI, 1 October 2006 (2006-10-01), pages 165-172, discloses a communication system for communication of information between indoor users equipped with tabletop displays and outdoor users equipped with mobile augmented reality systems. In that system physical objects are captured by a series of cameras viewing a table surface indoors, the data is sent over a wireless network and is then reconstructed at real-world locations for outdoor augmented reality users.

"Extending Tabletops to Support Flexible Collaborative Interactions" by Rogers et. al. HORIZONTAL INTERACTIVE HUMAN-COMPUTER SYSTEMS, 2006. TABLETOP 2006. FIRST IEEE INTERNATIONAL WORKSHOP ON ADELAIDE, SOUTH AUSTRALIA 05-07 JAN. 2006, PISCATAWAY, NJ, USA,IEEE, 5 January 2006 (2006-01-05), pages 71-78, discloses a system that uses tabletops for collaboration, the tabletops being extended by integrating it with other spaces and artefacts in the physical world.

US-2007/0242051-A1 describes an electronic conference system comprising a first conference controller, a second conference controller and a portable storage device. The portable storage device is used to transfer acquisition source information, using a card reader, from the first conference controller to the second conference controller such that the second conference controller can acquire a screen image displayed on the first conference controller.

US-2007/0244970-A1 describes a conference system including a terminal that displays a document presented by a presenter in a conference and is capable of receiving writing inputs from a participant for enabling exchange of opinions. The terminal may read the document from a data card using a card reader.

### DETAILED DESCRIPTION OF THE INVENTION

Various respective aspects and features of the invention are defined in the appended claims.

Embodiments of the invention provide a method of providing user information, by which a user list including a plurality of users and user cards of some plurality of user list are displayed on a display according to the users to allow a user to further easily check and apply a network of the users even in a complicated network environment.

Embodiment also provide a method of providing user information, by which user cards including items related to users selected from a plurality of users are displayed according to the users.

Embodiments also provide a device adopting the methods.

Embodiments of the invention provide a method of providing user information. The method may include: displaying a user list, in which a plurality of users are listed, on a display; and displaying user cards of some of the users listed in the user list according to the users.

The some users whose user cards are displayed may be some selected from the users listed in the user list.

The selected some users may be users who are moved outside the user list on the display.

The user cards may be displayed in positions which are moved outside the user list on the display.

User-related items may appear in the user list and the user cards. At least one of the user-related items appearing in the user list may be different from at least one of the user-related items appearing in the user cards.

The user-related items appearing in the user list may include at least one of a user photograph, a user name, information about a device accessed by a user, a user information revising icon, and a log-out icon.

At least one of the user information revising icon and the log-out icon may appear only in users who access a device which displays the user list.

The user-related items appearing in the user list may include at least one of a user photograph, a user name, information about a device accessed by a user, a user information revising icon, and detailed user information.

The users listed in the user list may be users who access one of at least one devices which are connected through a network.

The users listed in the user list may be users who provide information about the users to one of at least one devices to access the one device, wherein the information about the users is recorded in a particular medium.

Users who access a device may be listed in the user list to neighbour one another.

The method may further include transmitting contents to a device accessed by one of the users listed in the user list.

The contents may be transmitted to the device accessed by one of the users of the user list who appears in a position into which the contents are moved on the display.

The method may further include displaying information, which indicates that the contents are being transmitted, in an area of a user who appears in a position into which the contents are moved on the display.

The contents may be contents which are manually generated by one of the plurality of users.

If the user list is ended and disappears from the display, the user cards displayed on the display may be ended along with the user list and disappear from the display.

If the some users log out by using the user list, the user cards of the some users displayed on the display may be ended and disappear from the display.

The method may further include: if the contents displayed on the display are moved into the user card, transmitting the contents to a device accessed by the user of the user card into which the contents are moved.

The method may further include displaying information, which indicates that the contents are being transmitted, in the user card into which the contents are moved.

The contents may be contents which are manually generated by one of the plurality of users.

The method may further include displaying a meeting record of a meeting, which is held by the plurality of users, on the display.

In the meeting record, the plurality of users may appear as meeting attendees, and contents remarked by the meeting attendees may appear as texts.

The remarked contents may appear along with the names of the meeting attendees who remark the contents.

The method may further include providing Personal Information Management Systems (PIMSs) of at least one of the plurality of users according to the users.

The method may further include transmitting the PIMSs through e-mails according to the users.

The method may further include providing a chatting window through which chatting is performed with one of the plurality of users listed in the user list.

Embodiments of the invention provide a device including; and a controller which displays a user list, in which a plurality of users are listed, on the display and displays user cards of some of the users listed in the user list according to the users.

Embodiments of the invention include a method of providing user information. The method may include: selecting some of a plurality is users; and displaying user cards, in which items related to the selected users are recorded, according to the users.

The items may include at least one of information about the users and an icon used to input commands of the users.

According to another aspect of embodiments there is provided a device including: a display; and controller which displays user cards, which items related to users selected from a plurality of users are recorded, on the display according to the users.

According to another aspect of embodiments there is provided a method of providing user information by a device. The method comprises: in response to an identification card being in contact with at least one card reader included in the device, obtaining user information of a user corresponding to the identification card in contact with the card reader by reading information recorded in the identification card through the card reader; generating and displaying, on a display, a user list including a user who connects to the at least one card reader based on the obtained user information; when at least one user included in the user list is selected, generating and displaying a user card of the selected user based on user information of the selected user; wherein the user list and the user card are generated in a GUI form.

According to another aspect of embodiments there is provided a device comprising: a display, at least one card reader and a controller. The controller is operable to: in response to an identification card being in contact with the at least one card reader, obtain user information of a user corresponding to the identification card in contact with the card reader by reading information recorded in the identification card through the card reader; and generate a user list including a user who connects to the at least one card reader based on the obtained user information, and display the user list on the display. When at least one user included in the user list is selected, the controller is further operable to: generate a user card of the selected user based on user information of the selected user; and display the user card on the display. The controller is configured to generate the user list and the user card in a Graphical User Interface form.

### ADVANTAGEOUS EFFECTS

As described above, according to the present invention, a user list including a plurality of users and user cards of some of the plurality of users of the user list may be displayed on a display according to the users. Therefore, a user may further easily check and apply a network of the users even in a complicated network environment. Here, the applications of the network may include checking of detailed user information, a transmission of a user command, a transmission of contents to a device accessed by the user, etc.

### DESCRIPTION OF THE DRAWINGS

FIG. 1 is a view illustrating a concept of a generations of a user list.
FIG. 2 is a view illustrating a concept of a user list including users who access several tabletop devices.
FIG. 3 is a view illustrating a detailed description of a user list. FIGS. 4 through 7 are views illustrating a process of revising user information by using a user information revising icon.
FIGS. 8 through 10 are views illustrating a process of logging out by using a log-out icon to cancel an access to a tabletop device.
FIGS. 11 through 13 are views illustrating a process of transmitting contents by using an accessing user list.
FIGS. 14 and 15 are views illustrating a concept of a generation of user cards from an accessing user list.
FIG. 16 is a view illustrating a detailed description of a user card.
FIGS. 17 through 20 are views illustrating a process of revising user information by using a user information revising icon.
FIGS. 21 through 23 are views illustrating a process of transmitting contents by using a user card.
FIG. 24 is a view illustrating a description of a function of providing a digital reference record.
FIG. 25 is a view illustrating a description of a function of providing Personal Information Management Systems (PIMSs).
FIG. 26 is a block diagram of a device to which the present invention may be applied.
FIG. 27 is a flowchart illustrating a control process performed by a controller of FIG. 26.

### BEST MODE

The present invention will now be described in more detail with reference to the attached drawings.

In the present invention, user information is provided, and an accessing user list, which is a kind of graphical user interface (GUI) capable of applying the user information, and user cards are suggested. Hereinafter, a process of generating an accessing user list and user cards, structures of the accessing user list and the user cards, and applications of the accessing user list and the user cards will be described in detail.

### 1. Generation of Accessing User List

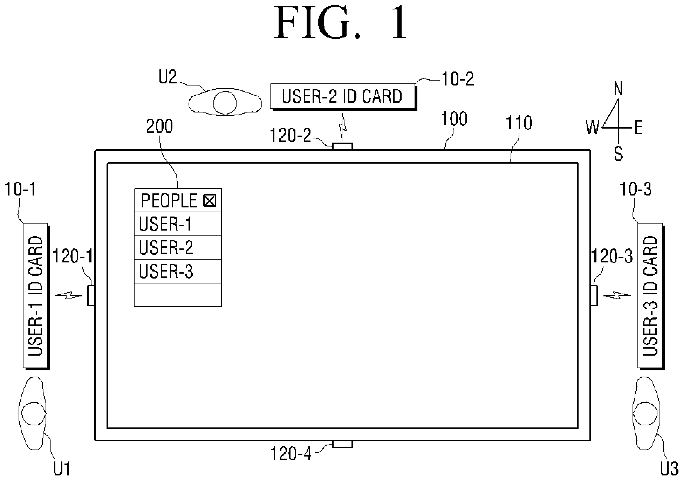

FIG. 1 is a view illustrating a concept of a generation of an accessing user list. A tabletop 100 used in a digital meeting is shown in FIG. 1. As shown in FIG. 1, a touch screen 110 is provided on an upper part of the tabletop device 100, and first through fourth card readers 120-1 through 120-4 are respectively provided on four sides of the tabletop device 100.

A first user U1 accesses a south side of the tabletop device 100 to bring a first identification (ID) card 10-1 of the first user U1 into contact with the first card reader 120-1 which is provided on the south side of the tabletop device 100. A second user U2 accesses a north side of the tabletop device 100 to bring a second ID card 10-2 of the second user U2 into contact with the second card reader 120-2 which is provided on the north side of the tabletop device 100. A third user U3 accesses an east side of the tabletop device 100 to bring a third ID card 10-3 of the third user U3 into contact with the third card reader 120-3 which is provided on the east side of the tabletop device100. In this case, the tabletop device 100 recognizes that the first, second, and third users U1, U2, and U3 have accessed thereto, from information which is recorded in the first, second, and third ID cards 10-1, 10-2, and 10-3 and read through the first, second, and third card readers 120-1, 120-2, and 120-3. Also, the tabletop device 100 obtains information about the first, second, and third users U1, U2, and U3 from the information which is recorded in the first, second, and third ID cards 10-1, 10-2, and 10-3 and read through the first, second, and third card readers 120-1, 120-2, and 120-3.

The tabletop device 100 displays an accessing user list 200 on the touch screen 110, wherein the first, second, and third users U1, U2, and U3 who have accessed the tabletop device 100 are listed in the accessing user list 200.

Users who have accessed the tabletop device 100 are listed in the accessing user list 200 shown in FIG. 1. However, users who have accessed several tabletop devices may be listed in a user list.

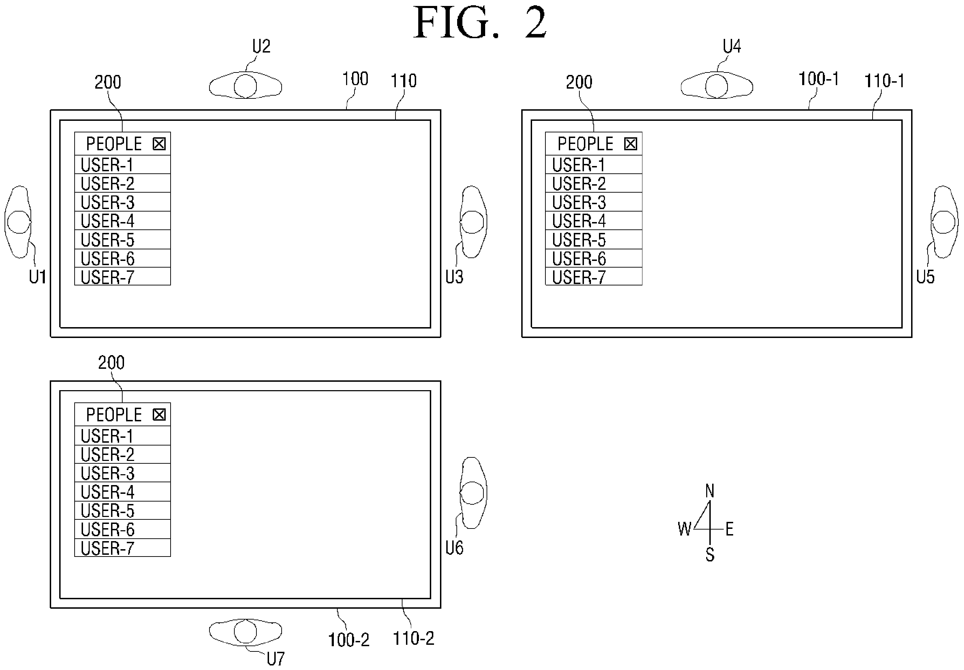

A plurality of tabletop devices 100, 100-1, and 100-2 are shown in FIG. 2. Referring to FIG. 2, first, second, and third users U1, U2, and U3 access the tabletop device 100. Also, fourth and fifth users U4 and U5 access the tabletop device 100-1, and sixth and seventh users U6 and U7 access the tabletop device 100-2.

Although not shown in FIG. 2, the tabletop devices 100, 100-1, and 100-2 are connected to one another to communicate with one another through a network. The network may be a wire or wireless network. Therefore, the tabletop devices 100, 100-1, and 100-2 transmit and receive data with one another.

The tabletop devices 100, 100-1, and 100-2 share information about users, who have accessed them, with the other tabletop devices. Therefore, an accessing user list 200 may be displayed on touch screens 110, 110-1, and 110-2 of the tabletop devices 100, 100-1, and 100-2. Here, a user who has accessed one of the tabletop devices 100, 100-1, and 100-2 and users who have accessed the other tabletop devices are listed in the accessing user list 200.

In other words, the first through seventh users U1 through U7, who have accessed all of the tabletop devices 100, 100-1, and 100-2 which are connected to one another through the network, are listed in the accessing user list 200 which is provided by the tabletop devices 100, 100-1, and 100-2 through the touch screens 110, 110-1, and 110-2.

If one of users listed in the accessing user list 200 is touched, a chatting window through which chatting may be performed with the touched user is provided.

### 2. Structure of Accessing User List

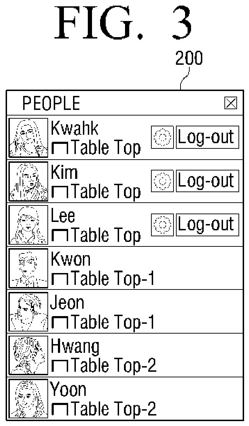

FIG. 3 is a view illustrating a detailed description of an accessing user list. In other words, a structure of an accessing user list 200 is shown in FIG. 3 in detail.

As described above, users are listed in the accessing user list 200. As shown in FIG. 3, listing orders of the users depend on tabletop devices accessed by the users and accessing orders.

In detail, users who have accessed the same tabletop device are listed to neighbor one another. In FIG. 3, users "Kwahk," "Kim," and "Lee" who have accessed a tabletop device 100 are first listed. Next, users "Kwon" and "Jeon" who have accessed a tabletop device 100-1 are listed. Users who have accessed a tabletop device 100-2 are lastly listed.

Also, listing orders of users who have accessed the same tabletop device depend on accessing orders. In other words, a listing order of a user who has first accessed a tabletop device comes first. In other words, the accessing orders of the users who have accessed the tabletop device 100 may be same as the listing orders of the users "Kwahk" → "Kim" → "Lee".

The above-described listing orders of the users are only exemplary. The listing orders may be rearranged according to another standard.

As shown in FIG. 3, user-related items, such as user photographs, user names, names of tabletop devices accessed by the users, user information revising icons ⊚, and log-out icons, etc., appear in the accessing user list 200 according to the users.

The user photographs and user names are information which is to distinguish users from the other users.

The names of the tabletop devices accessed by the users correspond to names of tabletop devices which are currently accessed and used by the users.

As shown in FIG. 3, in the accessing user list 200, the users "Kwahk," "Kim," and "Lee" access the tabletop device 100, the users "Kwon" and "Jeon" access the tabletop device 100-1, and the users "Hwan" and "Yoon" access the tabletop device 100-2.

The user information revising icons ⊚ and the log-out icons appear only in some of the users who are listed in the accessing user list 200.

The users in which the user information revising icons ⊚ and the log-out icons appear correspond to users who access a tabletop device including a touch screen on which the accessing user list 200 is displayed.

The accessing user list 200 shown in FIG. 3 is displayed on the touch screen 110 of the tabletop device 100. This is because the user information revising icons ⊚ and the log-out icons appear only in the users "Kwahk," "Kim," and "Lee."

In an accessing user list which is displayed on a touch screen of the tabletop device 100-1, the user information revising icons ⊚ and the log-out icons will appear only in the users "Kwon" and "Jeon".

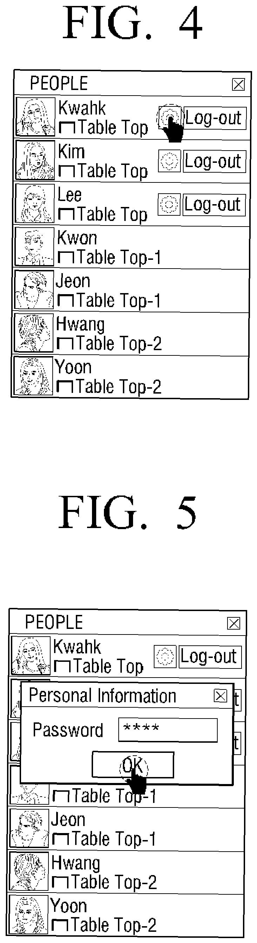

FIGS. 4 through 7 are views illustrating a process of revising user information by using user information revising icons ⊚.

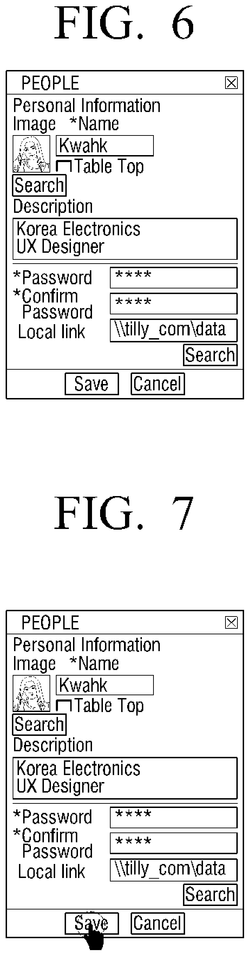

If a user information revising icon of the user "Kwahk" is touched as shown in FIG. 4, an authentication procedure is performed as shown in FIG. 5, and then a user information revising window appears as shown in FIG. 6.

If a save icon is touched after information revising is completed by using a user information revising window as shown in FIG. 7, the tabletop device 100 revises user information about the user "Kwahk" according to contents which have been revised through the user information revising window.

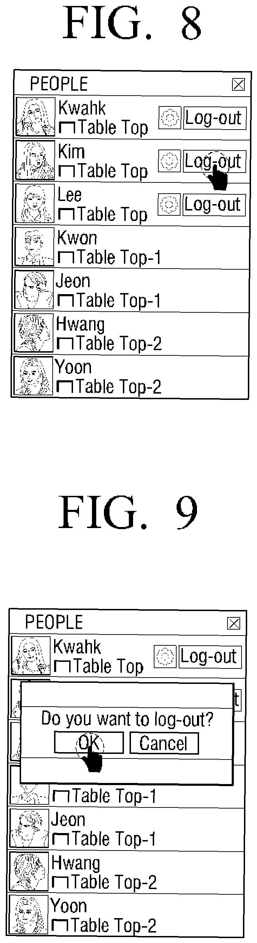

FIGS. 8 through 10 are views illustrating a process of logging out by using a log-out icon to cancel an access to the tabletop device 100.

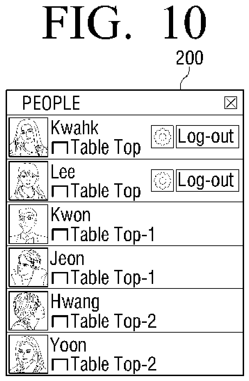

If a log-out icon of the user "Kim" is touched as shown in FIG. 8, the tabletop device 100 performs a confirming procedure as shown in FIG. 9 and then performs log-out processing with respect to the user "Kim." As a result, as shown in FIG. 10, the user "Kim" is deleted from the accessing user list 200.

### 3. Transmission of Contents by Using Accessing User List

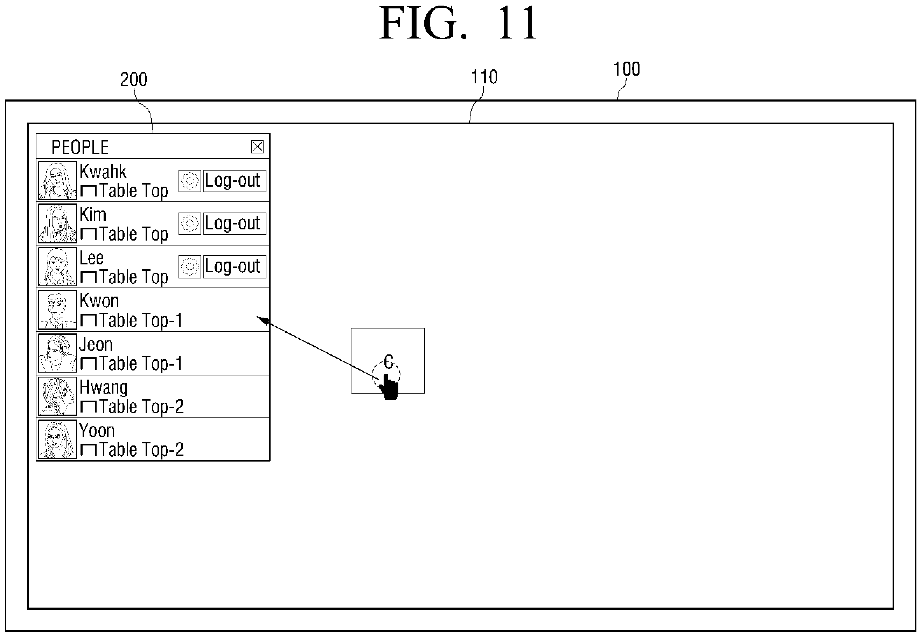

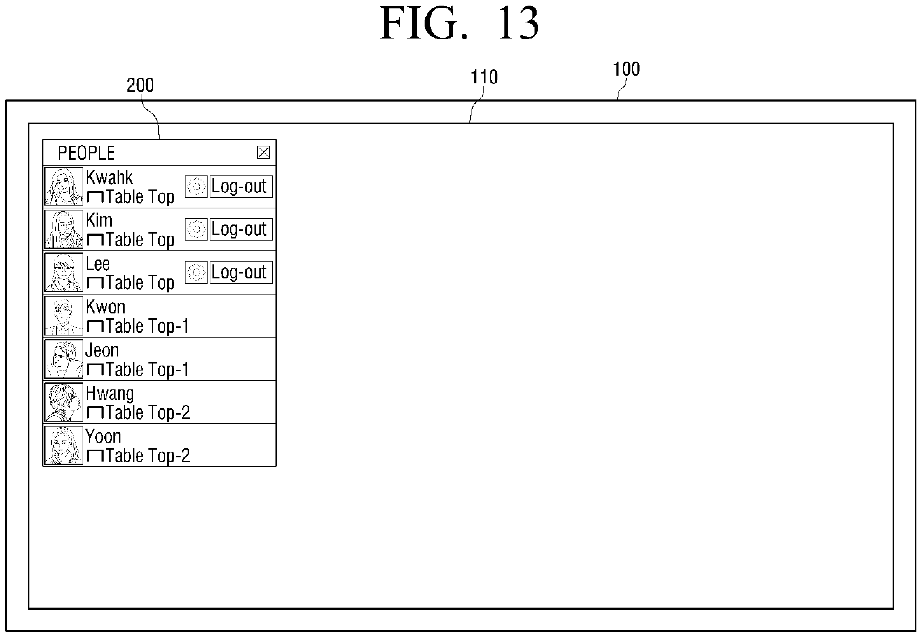

FIGS. 11 through 13 are views illustrating a process of transmitting contents by using an accessing user list.

As shown in FIG. 11, if contents C displayed on the touch screen 110 are dragged and dropped into the user "Kwon" listed in the accessing user list 200, the tabletop device 100 transmits the contents C to the tabletop device 100-1 accessed by the user "Kwon."

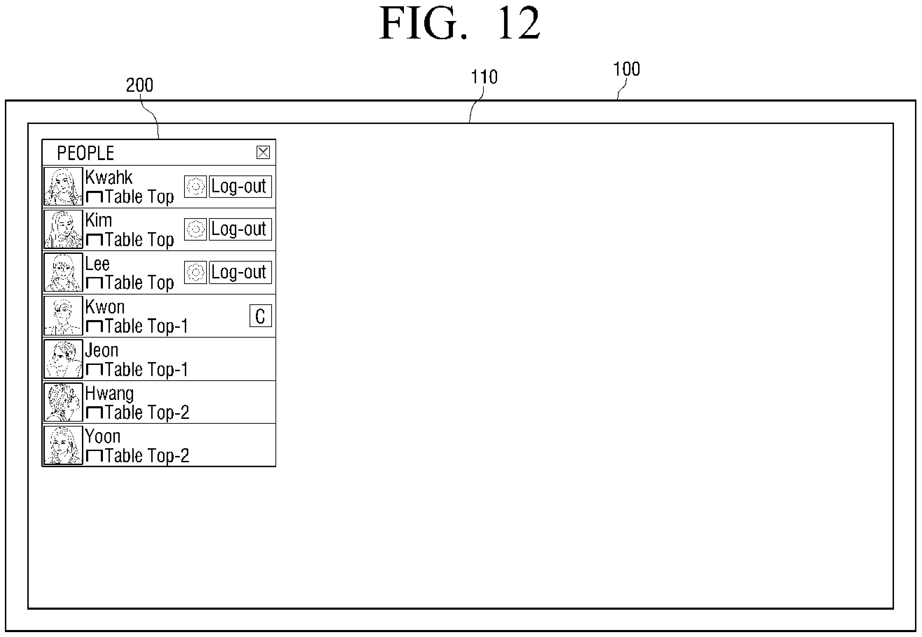

When transmitting the contents C, as shown in FIG. 12, an icon is displayed in the user "Kwon" to indicate the contents C and indicate that the contents C are being transmitted to the user "Kwon."

If the transmission of the contents C is completed, the tabletop device 100 makes the icon indicating the contents C disappear from the user "Kwon" to indicate that the transmission of the contents C is completed.

The transmitted contents C are not limited. In other words, memoranda written or pictures drawn through the touch screen 110 may be transmitted by using the above-described method.

### 4. Generation of User Cards From Accessing User List

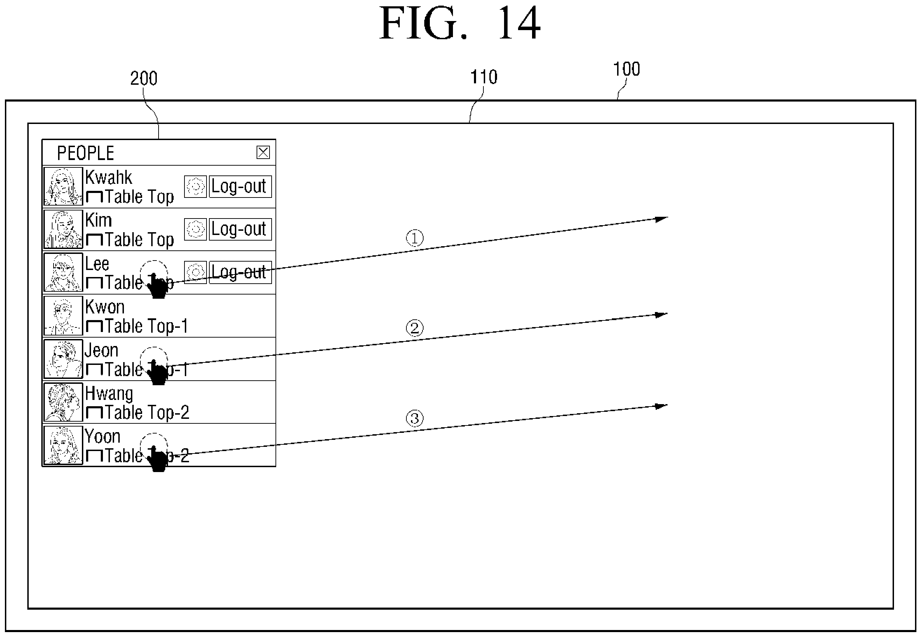

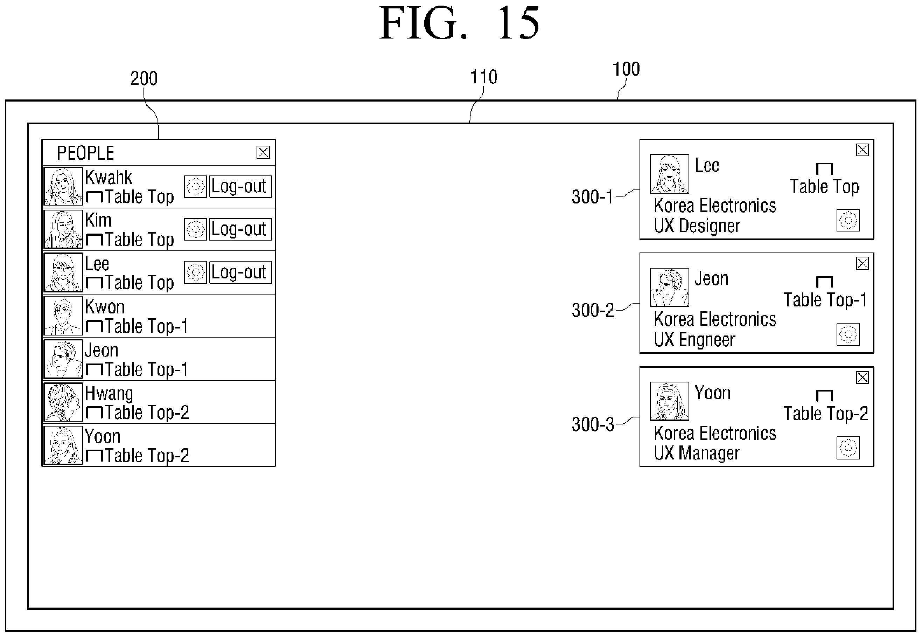

FIGS. 14 and 15 are views illustrating a concept of a generation of user cards from an accessing user list.

If the users "Lee," "Jeon," and "Yoon" listed in the accessing user list 200 are dragged and dropped ①, ②, and ③ outside the accessing user list 200 as shown in FIG. 14, the tabletop device 100 generates user cards of the users "Lee," "Jeon," and "Yoon."

As shown in FIG. 15, the tabletop device 100 respectively displays generated user cards 300-1, 300-2, and 300-2 in dropped positions.

The user cards 300-1, 300-2, and 300-2 may be dragged and dropped to be moved on the touch screen 110. The accessing user list 200 may also be dragged and dropped to be moved on the touch screen 110.

Ending icons ⊗ displayed in the user cards 300-1, 300-2, and 300-2 are touched to individually end the user cards 300-1, 300-2, and 300-3, so that the user cards 300-1, 300-2, and 300-3 disappear from the touch screen 110.

An ending icon ⊗ displayed in the accessing user list 200 is touched to end the accessing user list 200. If the accessing user list 200 is ended, all of the user cards 300-1, 300-2, and 300-3 displayed on the touch screen 110 are ended together with the accessing user list 200.

Even if a user logs out by using the accessing user list 200, a user card of the logged out user is ended and disappears.

If one of the user cards 300-1, 300-2, and 300-3 is touched, a chatting window through which chatting may be performed with a user appearing in the touched user card is provided.

### 5. Structure of User Card

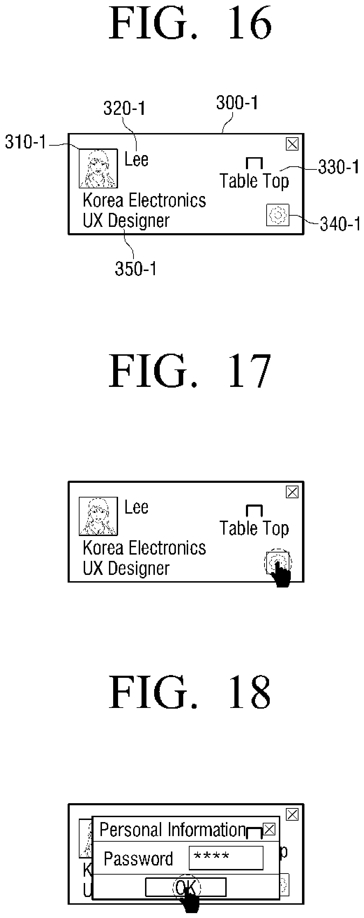

FIG. 16 is a view illustrating a detailed description of a user card. A structure of the user card 300-1 of the user "Lee" is shown in FIG. 16 in detail.

As shown in FIG. 16, the user card 300-1 includes user-related items such as a user photograph 310-1, a user name 320-1, a name 330-1 of a tabletop device accessed by the user, a user information revising icon 340-1, and detailed user information 350-1, etc.

Detailed descriptions of the user photograph 310-1, the user name 320-1, and the name 330-1 of the tabletop device, and the user information revising icon 340-1 are as described above and thus will be omitted.

The detailed user information 350-1 includes detailed information which is to distinguish a user from the other users, besides the user photograph 310-1 and the username 320-1. A company to which a user belongs and a position of the user in the company are shown as detailed user information in FIG. 16. Other types of information (e.g., contact information, an address, and sex of a user) may be recorded in detailed information of the user.

FIGS. 17 through 20 are views illustrating a process of revising user information by using the user information revising icon 340-1.

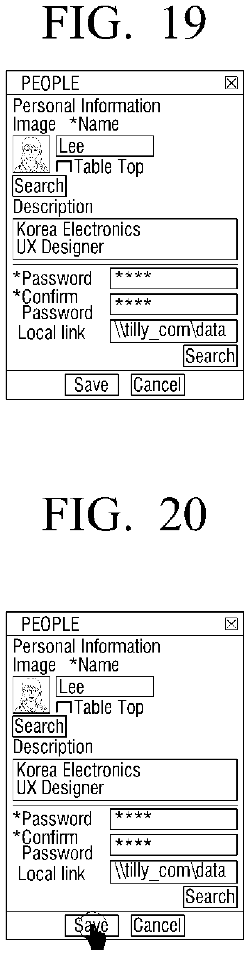

If the user information revising icon 340-1 of the user "Lee" is touched as shown in FIG. 17, an authentication procedure is performed as shown in FIG. 18, and then a user information revising window appears as shown in FIG. 19.

If a save icon is touched as shown in FIG. 20 after information revising is completed by using the user information revising window, the tabletop device 100 revises user information of the user "Lee" according to contents which have been revised through the user information revising window.

### 6. Transmission of Contents by Using User Cards

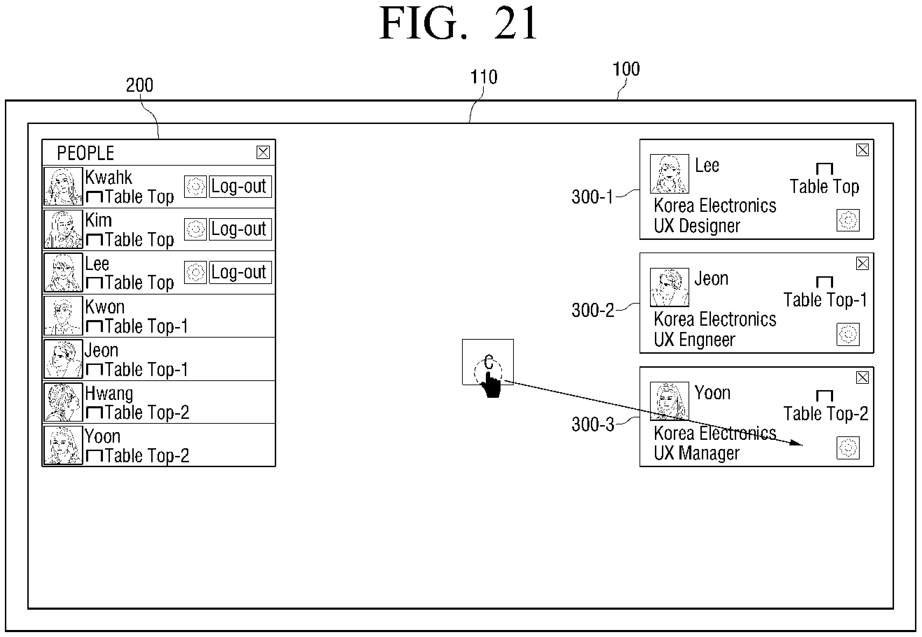

FIGS. 21 through 23 are views illustrating a process of transmitting contents by using user cards.

If contents C displayed on the touch screen 110 are dragged and dropped into the user card 300-3 of the user "Yoon" as shown in FIG. 21, the tabletop device 100 transmits the contents C to the tabletop device 100-2 accessed by the user "Yoon."

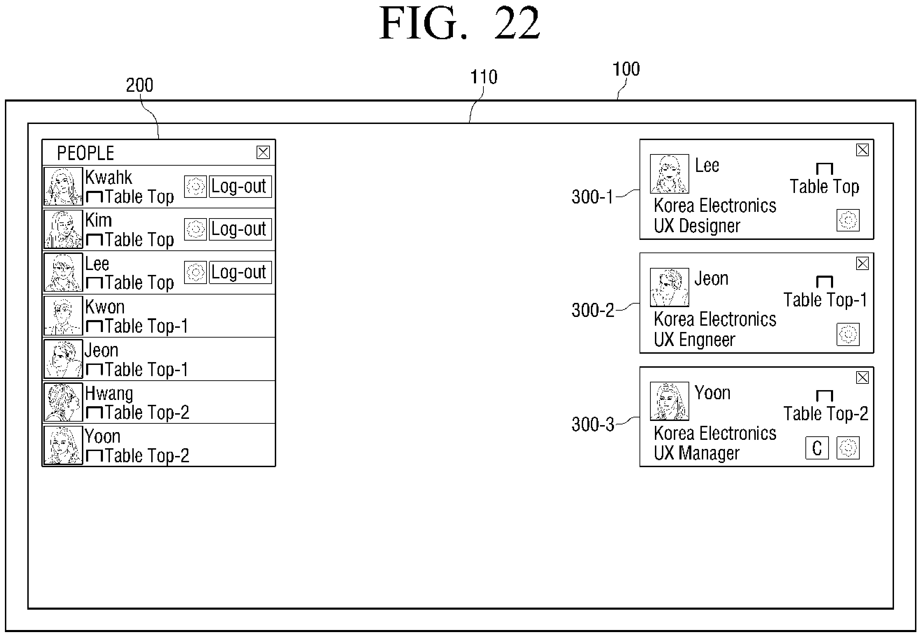

When transmitting the contents C, an icon is displayed to indicate the contents C and indicate that the contents C are being transmitted to the user "Yoon" as shown in FIG. 22.

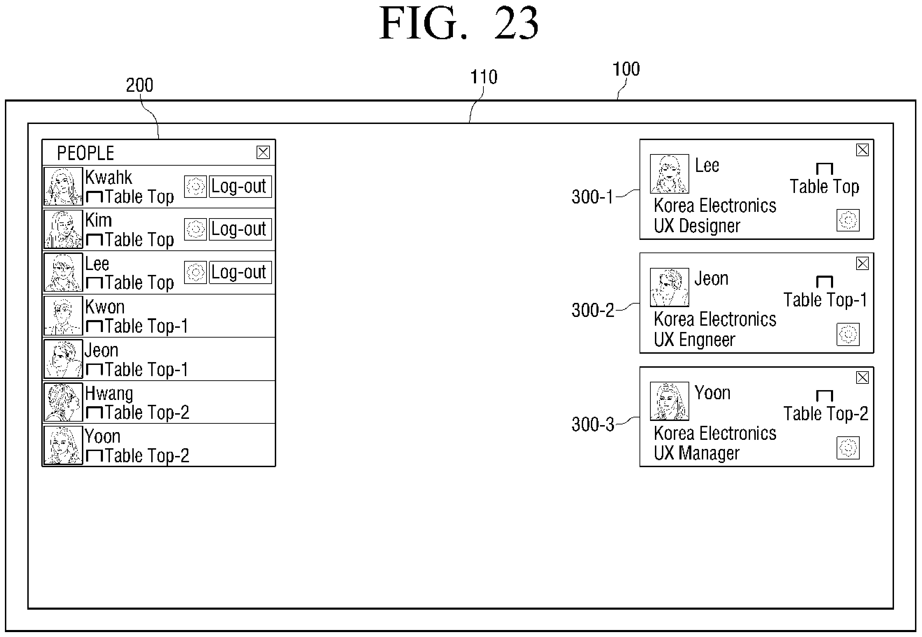

If the transmission of the contents C is completed, the tabletop device 100 makes the icon indicating the contents C disappear from the user card 300-3 of the user "Yoon" as shown in FIG. 23 to indicate that the transmission of the contents C is completed.

The transmitted contents C are not limited. Memoranda written or pictured drawn through the touch screen 110 may be transmitted by using the above-described method.

### 7. Subordinate Functions for Digital Meeting

### (1) Function of Providing Digital Meeting Record

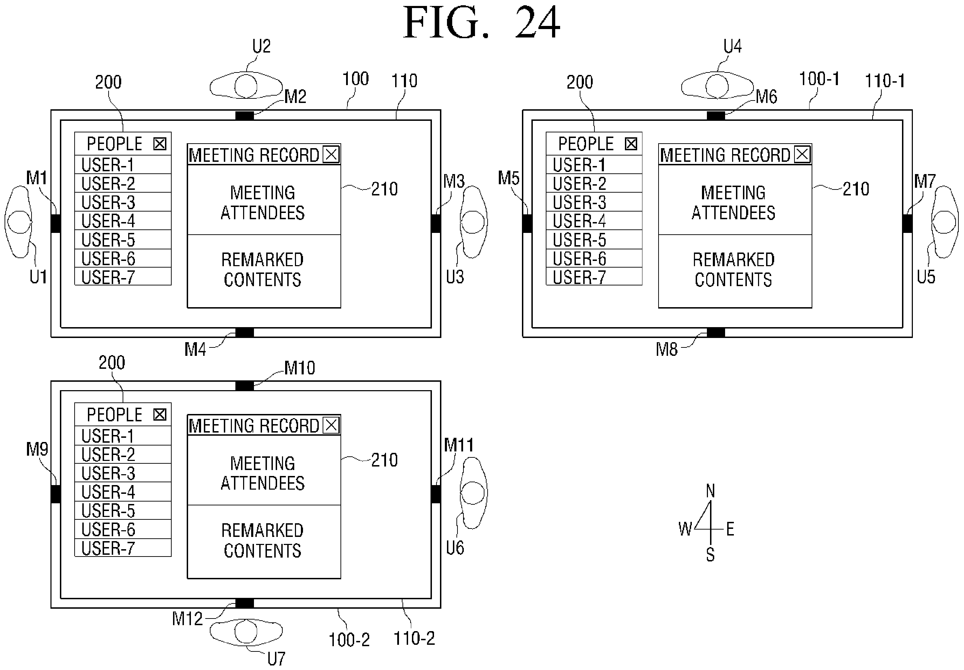

FIG. 24 is a view illustrating a situation in which first through seventh users U1 through U7 hold a digital meeting by using a plurality of tabletop devices 100, 100-1, and 100-2.

Referring to FIG. 24, besides an accessing user list 200, a digital meeting record 210 is further displayed on touch screens 110, 110-1, and 110-2 of the tabletop devices 100, 100-1, and 100-2.

As shown in FIG. 24, the digital meeting record 210 is divided into two areas, i.e., upper and lower areas. Meeting attendees appear in the upper area, and remarked contents appear in the lower area. Names of the first through seventh users U1 through U7 attending in a digital meeting are listed in the meeting attendees of the upper area. In the remarked contents, contents remarked by the meeting attendees appear as texts along with names of the meeting attendees who have remarked. For example, the remarked contents may appear in a format of "Meeting Attendees' Names: Remarked Contents"

### (2) Function of Providing PIMS

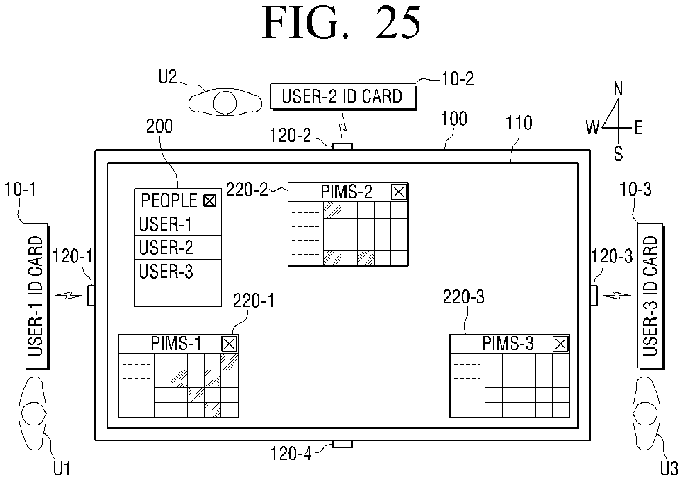

FIG. 25 is a view illustrating a situation in which first through third users U1 through U3 hold a digital meeting by using a tabletop device 100.

Referring to FIG 25, besides an accessing user list 200, first, second, and third Personal Information Management Systems (PIMSs) 220-1, 220-2, and 220-3 are further displayed on a touch screen 110 of the tabletop device 100.

The first, second, and third PIMSs 220-1, 220-2, and 220-3 are means which record and manage personal information such as schedules and are respectively provided to the first through third users U1 through U3. In other words, the first PIMS 220-1 for the first user U1, the second PIMS 220-2 for the second user U2, and the third PIMS 220-3 for the third user U3 are displayed on the touch screen 110 of the tabletop device 100

The first, second, and third PIMSs 220-1, 220-2, and 220-3 are provided on the touch screen 110 of the tabletop device 100 in order to immediately record and manage schedules or contents determined in the digital meeting.

The first, second, and third PIMSs 220-1, 220-2, and 220-3 may be stored in the tabletop device 100 and may be transmitted to corresponding users by using the same method as the content transmitting method illustrated in FIGS. 11 through 13 or the content transmitting method illustrated in FIGS. 21 through 23.

Also, the first, second, and third PIMSs 220-1, 220-2, and 220-3 may be transmitted to e-mails of the first through third users U1 through U3.

A digital meeting is held by using one tabletop device in FIG. 25. However, even if a digital meeting is held by using several tabletop devices, PIMSs may be provided.

### 8. Other Modifications

In the above-described embodiments, if users access a tabletop device, an accessing user list is generated and displayed. However, this is only an exemplary embodiment and thus may be modified.

If the users access the tabletop device, user cards of the users may be generated or displayed or the accessing user list and the user cards may be displayed together.

Also, user information (photographs, names, and detailed information of the users) is obtained from ID cards of the users. However, the user information may be obtained from other means. For example, the user information may be obtained from personal computers (PCs) of the users, management servers, or storage medium of the tabletop device.

In addition, among the users listed in the accessing user list, user cards of users, who are moved outside the accessing user list, are provided. However, this is only an exemplary embodiment for the descriptive convenience. A method of selecting the users whose user cards are provided may be realized differently from the above-described method. Also, users whose user cards appear through another means not through an accessing user list may be selected.

Also, in the above-described embodiments, user-related items, such as a user photograph, a user name, information about a device accessed by a user, a user information revising icon, a log-out icon, etc., appear in an accessing user list. User-related items, such as a user photograph, a user name, information about a device accessed by a user, a user information revising icon, detailed user information, etc., appear in a user card.

However, this is an exemplary embodiment, and thus other types of user-related items may be recorded in the accessing user list and the user card. Even in this case, at least one of the user-related items recorded in the accessing user list may be realized to be different from at least one of the user-related items recorded in the user card.

Besides an item indicating information about a user and an icon used to input a user command, other types of items may be recorded in the accessing user list and the user card.

Also, in the above-described embodiments, a user attends a digital meeting through a tabletop device, but this is only an exemplary embodiment. The user may access the tabletop device through a mobile PC of the user to attend the digital meeting.

### 9. Device to which the Present Invention May Be Applied.

In the above-described embodiments, an accessing user list and user cards are provided in the tabletop device 100. However, the present invention may be applied to other types of devices besides the tabletop device. In other words, the present invention may be applied to any device which may be shared by several users.

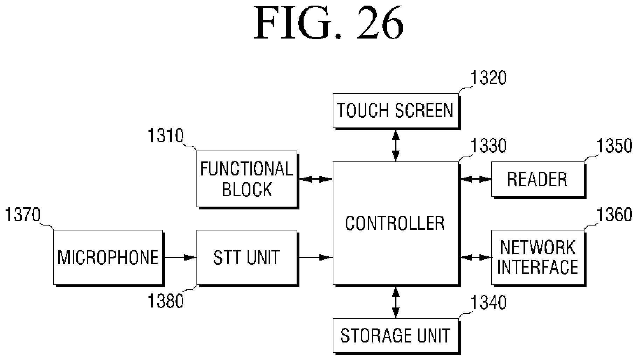

FIG. 26 is a block diagram of a device to which the present invention may be applied. Referring to FIG. 26, the device includes a functional block 1310, a touch screen 1320, a controller 1330, a storage unit 1340, a reader 1350, a network interface 1360, a microphone 1370, and a Speech To Text (STT) unit 1380.

The functional block 1310 performs a function of the device. If the device is a tabletop device, the functional block 1310 performs functions necessary for a digital meeting.

The touch screen 1320 operates as a display which displays graphical user interfaces (GUIs) such as an execution result of the function block 1310, an accessing user list, and user cards. The touch screen 1320 also operates as a user interface which is to receive user commands such as a touch, dragging and dropping, etc.

The storage unit 1340 is a storage medium which stores user information and contents.

The reader 1350 reads information which is recorded in a user ID card, and the network interface 1360 communicates with a device which is connected through a network.

The microphone 1370 generates remarked contents of a user as voice signals and transmits the voice signals to the STT unit 1380.

The STT unit 1380 converts the voice signals received from the microphone 1370 into texts and transmits the texts to the controller 1330.

The controller 1330 provides an accessing user list and user cards as described in the embodiments to a GUI and executes a user command which is input through the GUI. The controller 1330 also generates a digital meeting record by using the texts received from the STT unit 1380.

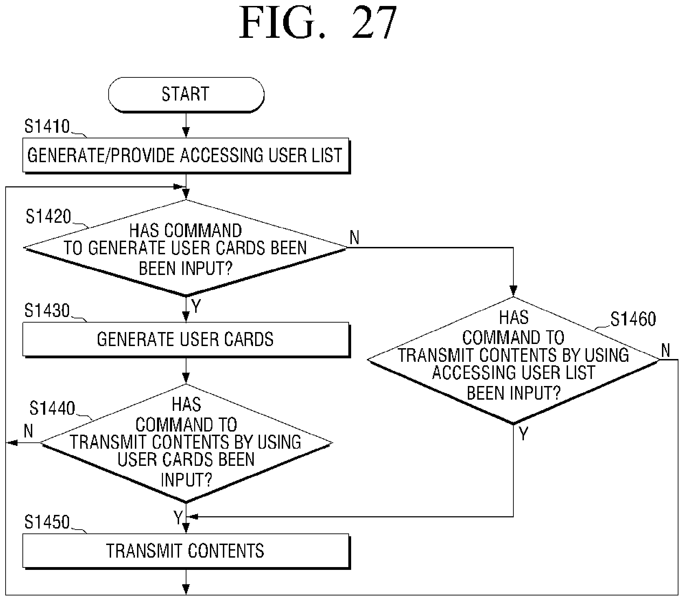

FIG. 27 is a flowchart illustrating a control process performed by the controller 1330. Referring to FIG. 27, in operation S1410, the controller 1330 generates an accessing user list based on information about users who access other devices connected through a network and displays the accessing user list on the touch screen 1320.

In operation S1420, the controller 1330 determines whether a command to generate user cards has been input from a user. If it is determined in operation S1420 that the command has been input from the user, the controller 1330 generates user cards of users selected from the accessing user list and displays the user cards on the touch screen 1320 in operation S1430.

In operation S1440, the controller 1330 determines whether the users have input commands to transmit contents by using the displayed user cards. If it is determined in operation S1440 that the users have input the commands, the controller 1330 transmits contents to tabletop devices which are designated by the user cards and accessed by the users in operation S1450.

In operation S1460, the controller 1330 determines whether the users have input commands to transmit contents by using the accessing user list provided in operation S1410. If it is determined in operation S1460 that the users have input the commands, the controller 1330 goes to operation S1450 to transmit the contents to the tabletop devices which are designated in the accessing user list and accessed by the users.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of providing user information by a first device (100), the method comprising:
in response to an identification card (10-1) being in contact with at least one card reader (120-1) included in the first device (100), obtaining user information of a user corresponding to the identification card (10-1) in contact with the card reader (120-1) by reading information recorded in the identification card (10-1) through the card reader (120-1);
generating and displaying, on a touch screen (110) of the first device (100), a user list (200) including an entry for a first user who connects to the at least one card reader (120-1) based on the obtained user information, wherein the user list (200) further includes an entry for a second user who connects to a card reader included in a second device (100-1) connected to the first device (100) through a network; and
when at least one user included in the user list (200) is selected (S1420), generating (S1430) and displaying a user card (300-1) of the selected user based on user information of the selected user;
wherein the user list (200) and the user card (300-1) are generated in a graphical user interface, GUI, form; and
wherein the method further comprises transmitting a displayed content to the second device (100-1) if the content is dragged and dropped to the entry for the second user on the touch screen (110).

2. The method of claim 1 wherein the user information is obtained for a plurality of users from a plurality of card readers (120-1).

3. The method as claimed in claim 2, wherein the at least one user selected from the user list (200) is moved outside the user list (200) on the GUI.

4. The method as claimed in claim 3, wherein the user card (300-1) of the selected user is displayed in a position which is moved outside the user list (200) on the display (110).

5. The method as claimed in claim 1, wherein user-related items appear in the user list (200) and the user cards (300-1) on the GUI; and
wherein at least one user-related items appearing in the user list (200) is different from at least one user-related items appearing in the user card (300-1).

6. The method as claimed in claim 5, wherein the user-related items appearing in the user list (200) comprise at least one of a user photograph, a user name, information about a device (100) accessed by a user, a user information revising icon, and a log-out icon.

7. The method as claimed in claim 6, wherein at least one of the user information revising icon and the log-out icon appear only in users who access a device (100) which displays the user list (200).

8. The method as claimed in claim 5, wherein the user- related items appearing in the user list (200) comprise at least one of a user photograph, a user name, information about a device (100) accessed by a user, a user information revising icon, and detailed user information.

9. The method as claimed in claim 1, further comprising displaying information on the GUI, which indicates that the contents are being transmitted, in an area of the entry for the second user on the user list (200).

10. A first device (100) comprising:
a touch screen (110);
a network interface (1360);
at least one card reader (120-1); and
a controller (1330) configured to:
in response to an identification card (10-1) being in contact with the at least one card reader (120-1), obtain user information of a user corresponding to the identification card (10-1) in contact with the card reader (120-1) by reading information recorded in the identification card (10-1) through the card reader (120-1);
generate a user list (200) including an entry for a first user who connects to the at least one card reader (120-1) based on the obtained user information, wherein the user list (200) further includes an entry for a second user who connects to a card reader included in a second device (100-1) connected to the first device (100) through a network; and
display the user list (200) on the display (110);
wherein, when at least one user included in the user list (200) is selected (S1420), the controller (1330) is configured to:
generate (S1430) a user card (300-1) of the selected user based on user information of the selected user; and
display the user card (300-1) on the display (110);
wherein the controller (1330) is configured to generate the user list (200) and the user card (300-1) in a Graphical User Interface, GUI, form; and
wherein the controller (1330) is configured to transmit a displayed content to the second device (100-1) if the content is dragged and dropped to the entry for the second user on the touch screen (110).

11. The first device (100) of claim 10, wherein the first device (100) is shared between a plurality of users, the first device (100) having a plurality of card readers (120-1), each of which allow a user to attach an identification card (10-1).

## Patentansprüche

1. Ein Verfahren zur Bereitstellung von Benutzerinformationen durch eine erste Vorrichtung (100), wobei das Verfahren Folgendes umfasst:
Abrufen von Benutzerinformationen eines Benutzers entsprechend einer Identifikationskarte (10-1) in Kontakt mit einem Kartenleser (120-1) infolge des Kontakts der Identifikationskarte (10-1) mit mindestens einem Kartenleser (120-1), der in der ersten Vorrichtung (100) vorhanden ist, indem in der Identifikationskarte (10-1) aufgezeichnete Informationen über den Kartenleser (120-1) gelesen werden;
Generieren und Anzeigen einer Benutzerliste (200) auf einem Berührungsbildschirm (110) der ersten Vorrichtung (100) mit einem Eintrag für einen ersten Benutzer, der anhand der abgerufenen Benutzerinformationen eine Verbindung mit dem mindestens einen Kartenleser (120-1) herstellt, wobei die Benutzerliste (200) ferner einen Eintrag für einen zweiten Benutzer aufweist, der eine Verbindung mit einem Kartenleser in einer zweiten Vorrichtung (100-1) herstellt, die über ein Netzwerk mit der ersten Vorrichtung (100) verbunden ist; und
Generieren (S1430) und Anzeigen einer Benutzerkarte (300-1) des ausgewählten Benutzers basierend auf den Benutzerinformationen des ausgewählten Benutzers, wenn mindestens ein in der Benutzerliste (200) enthaltener Benutzer ausgewählt (S1420) ist;
wobei die Benutzerliste (200) und die Benutzerkarte (300-1) in Form einer grafischen Benutzeroberfläche (Graphical User Interface, GUI) generiert werden; und
wobei das Verfahren weiter umfasst, dass ein angezeigter Inhalt an die zweite Vorrichtung (100-1) übertragen wird, wenn der Inhalt in den Eintrag für den zweiten Benutzer auf dem Berührungsbildschirm (110) verschoben und abgelegt wird.

2. Das Verfahren nach Anspruch 1, wobei die Benutzerinformationen für eine Vielzahl von Benutzern aus einer Vielzahl von Kartenlesern (120-1) abgerufen werden.

3. Das Verfahren nach Anspruch 2, wobei der mindestens eine aus der Benutzerliste (200) ausgewählte Benutzer an eine Stelle außerhalb der Benutzerliste (200) auf der GUI verschoben wird.

4. Das Verfahren nach Anspruch 3, wobei die Benutzerkarte (300-1) des ausgewählten Benutzers an einer Stelle angezeigt wird, die außerhalb der Benutzerliste (200) auf der Anzeige (110) verschoben wird.

5. Das Verfahren nach Anspruch 1, wobei benutzerbezogene Elemente in der Benutzerliste (200) und Benutzerkarten (300-1) auf der GUI angezeigt werden; und
wobei sich mindestens ein benutzerbezogenes Element, das in der Benutzerliste (200) angezeigt wird, von mindestens einem benutzerbezogenen Element unterscheidet, das in der Benutzerkarte (300-1) angezeigt wird.

6. Das Verfahren nach Anspruch 5, wobei die in der Benutzerliste (200) angezeigten benutzerbezogenen Elemente ein Foto des Benutzers, einen Benutzernamen, Informationen über eine Vorrichtung (100), auf die ein Benutzer zugegriffen hat, ein Symbol für die Überarbeitung von Benutzerinformationen und/oder ein Symbol für die Abmeldung umfassen.

7. Das Verfahren nach Anspruch 6, wobei das Symbol für die Überarbeitung der Benutzerinformationen und/oder das Symbol für die Abmeldung nur für Benutzer angezeigt werden, die auf eine Vorrichtung (100) zugreifen, welche die Benutzerliste (200) anzeigt.

8. Das Verfahren nach Anspruch 5, wobei die in der Benutzerliste (200) angezeigten benutzerbezogenen Elemente ein Foto des Benutzers, einen Benutzernamen, Informationen über eine Vorrichtung (100), auf die ein Benutzer zugegriffen hat, ein Symbol für die Überarbeitung von Benutzerinformationen und/oder detaillierte Benutzerinformationen umfassen.

9. Das Verfahren nach Anspruch 1, das ferner das Anzeigen von Informationen auf der GUI umfasst, die angibt, dass die Inhalte übertragen werden, wobei dies in einem Bereich des Eintrags für den zweiten Benutzer auf der Benutzerliste (200) erfolgt.

10. Eine erste Vorrichtung (100), die Folgendes umfasst:
einen Berührungsbildschirm (110);
eine Netzwerkschnittstelle (1360);
mindestens einen Kartenleser (120-1); und
eine Steuereinheit (1330), die für folgende Zwecke eingerichtet ist:
Abrufen von Benutzerinformationen eines Benutzers entsprechend einer Identifikationskarte (10-1) in Kontakt mit einem Kartenleser (120-1) infolge des Kontakts der Identifikationskarte (10-1) mit mindestens einem Kartenleser (120-1), indem in der Identifikationskarte (10-1) aufgezeichnete Informationen über den Kartenleser (120-1) gelesen werden;
Generieren einer Benutzerliste (200) mit einem Eintrag für einen ersten Benutzer, der anhand der abgerufenen Benutzerinformationen eine Verbindung mit dem mindestens einen Kartenleser (120-1) herstellt, wobei die Benutzerliste (200) ferner einen Eintrag für einen zweiten Benutzer aufweist, der eine Verbindung mit einem Kartenleser in einer zweiten Vorrichtung (100-1) herstellt, die über ein Netzwerk mit der ersten Vorrichtung (100) verbunden ist; und
Anzeigen der Benutzerliste (200) auf der Anzeige (110);
wobei die Steuereinheit (1330) für folgende Zwecke eingerichtet ist, wenn mindestens ein in der Benutzerliste (200) enthaltener Benutzer ausgewählt (S1420) ist:
Generieren (S1430) einer Benutzerkarte (300-1) des ausgewählten Benutzers basierend auf den Benutzerinformationen des ausgewählten Benutzers; und
Anzeigen der Benutzerkarte (300-1) auf der Anzeige (110);
wobei die Steuereinheit (1330) eingerichtet ist, um die Benutzerliste (200) und die Benutzerkarte (300-1) in Form einer grafischen Benutzeroberfläche (Graphical User Interface, GUI) zu generieren; und
wobei die Steuereinheit (1330) eingerichtet ist, um einen angezeigten Inhalt an die zweite Vorrichtung (100-1) zu übertragen, wenn der Inhalt in den Eintrag für den zweiten Benutzer auf dem Berührungsbildschirm (110) verschoben und abgelegt wird.

11. Die erste Vorrichtung (100) nach Anspruch 10, wobei die erste Vorrichtung (100) unter einer Vielzahl von Benutzern geteilt wird, wobei die erste Vorrichtung (100) eine Vielzahl von Kartenlesern (120-1) aufweist, wobei ein Benutzer in jeden von diesen Kartenlesern eine Identifikationskarte (10-1) einfügen kann.

## Revendications

1. Un procédé de fourniture d'informations d'utilisateur par un premier dispositif (100), le procédé comprenant :
en réponse à une carte d'identification (10-1) étant en contact avec au moins un lecteur de carte (120-1) inclus dans le premier dispositif (100), l'obtention d'informations d'utilisateur d'un utilisateur correspondant à la carte d'identification (10-1) en contact avec le lecteur de carte (120-1) par la lecture d'informations enregistrées dans la carte d'identification (10-1) par l'intermédiaire du lecteur de carte (120-1),
la génération et l'affichage, sur un écran tactile (110) du premier dispositif (100), d'une liste d'utilisateurs (200) comprenant une entrée pour un premier utilisateur qui se connecte au au moins un lecteur de carte (120-1) en fonction des informations d'utilisateur obtenues, où la liste d'utilisateurs (200) comprend en outre une entrée pour un deuxième utilisateur qui se connecte à un lecteur de carte inclus dans un deuxième dispositif (100-1) raccordé au premier dispositif (100) par l'intermédiaire d'un réseau, et
lorsqu'au moins un utilisateur inclus dans la liste d'utilisateurs (200) est sélectionné (S1420), la génération (S1430) et l'affichage d'une carte d'utilisateur (300-1) de l'utilisateur sélectionné en fonction d'informations d'utilisateur de l'utilisateur sélectionné,
où la liste d'utilisateurs (200) et la carte d'utilisateur (300-1) sont générées sous la forme d'une interface utilisateur graphique, GUI, et
où le procédé comprend en outre la transmission d'un contenu affiché vers le deuxième dispositif (100-1) si le contenu est glissé et déposé au niveau de l'entrée pour le deuxième utilisateur sur l'écran tactile (110).

2. Le procédé selon la Revendication 1 où les informations d'utilisateur sont obtenues pour une pluralité d'utilisateurs à partir d'une pluralité de lecteurs de carte (120-1).

3. Le procédé selon la Revendication 2, où le au moins un utilisateur sélectionné à partir de la liste d'utilisateurs (200) est déplacé hors de la liste d'utilisateurs (200) sur la GUI.

4. Le procédé selon la Revendication 3, où la carte d'utilisateur (300-1) de l'utilisateur sélectionné est affichée dans une position qui est déplacée hors de la liste d'utilisateurs (200) sur le dispositif d'affichage (110).

5. Le procédé selon la Revendication 1, où des éléments liés à l'utilisateur apparaissent dans la liste d'utilisateurs (200) et les cartes d'utilisateur (300-1) sur la GUI, et
où au moins un des éléments liés à l'utilisateur qui apparaît dans la liste d'utilisateurs (200) est différent d'au moins un des éléments liés à l'utilisateur qui apparaît dans la carte d'utilisateur (300-1).

6. Le procédé selon la Revendication 5, où les éléments liés à l'utilisateur qui apparaissent dans la liste d'utilisateurs (200) comprennent au moins un élément parmi une photographie d'utilisateur, un nom d'utilisateur, des informations relatives à un dispositif (100) accédé par un utilisateur, une icône de révision d'informations d'utilisateur et une icône de déconnexion.

7. Le procédé selon la Revendication 6, où au moins un élément parmi l'icône de révision d'informations d'utilisateur et l'icône de déconnexion apparaît uniquement chez des utilisateurs qui accèdent à un dispositif (100) qui affiche la liste d'utilisateurs (200).

8. Le procédé selon la Revendication 5, où les éléments liés à l'utilisateur qui apparaissent dans la liste d'utilisateurs (200) comprennent au moins un élément parmi une photographie d'utilisateur, un nom d'utilisateur, des informations relatives à un dispositif (100) accédé par un utilisateur, une icône de révision d'informations d'utilisateur et des informations d'utilisateur détaillées.

9. Le procédé selon la Revendication 1, comprenant en outre l'affichage d'informations relatives à la GUI, qui indiquent que les contenus sont transmis, dans une zone de l'entrée pour le deuxième utilisateur sur la liste d'utilisateurs (200).

10. Un premier dispositif (100) comprenant :
un écran tactile (110),
une interface de réseau (1360),
au moins un lecteur de carte (120-1), et
un dispositif de commande (1330) configuré de façon à :
en réponse à une carte d'identification (10-1) étant en contact avec le au moins un lecteur de carte (120-1), obtenir des informations d'utilisateur d'un utilisateur correspondant à la carte d'identification (10-1) en contact avec le lecteur de carte (120-1) par la lecture d'informations enregistrées dans la carte d'identification (10-1) par l'intermédiaire du lecteur de carte (120-1),
générer une liste d'utilisateurs (200) comprenant une entrée pour un premier utilisateur qui se connecte au au moins un lecteur de carte (120-1) en fonction des informations d'utilisateur obtenues, où la liste d'utilisateurs (200) comprend en outre une entrée pour un deuxième utilisateur qui se connecte à un lecteur de carte inclus dans un deuxième dispositif (100-1) raccordé au premier dispositif (100) par l'intermédiaire d'un réseau, et
afficher la liste d'utilisateurs (200) sur le dispositif d'affichage (110), où, lorsqu'au moins un utilisateur inclus dans la liste d'utilisateurs (200) est sélectionné (S1420), le dispositif de commande (1330) est configuré de façon à :
générer (S1430) une carte d'utilisateur (300-1) de l'utilisateur sélectionné en fonction d'informations d'utilisateur de l'utilisateur sélectionné, et
afficher la carte d'utilisateur (300-1) sur le dispositif d'affichage (110), où le dispositif de commande (1330) est configuré de façon à générer la liste d'utilisateurs (200) et la carte d'utilisateur (300-1) sous la forme d'une interface utilisateur graphique, GUI, et
où le dispositif de commande (1330) est configuré de façon à transmettre un contenu affiché vers le deuxième dispositif (100-1) si le contenu est glissé et déposé au niveau de l'entrée pour le deuxième utilisateur sur l'écran tactile (110).

11. Le premier dispositif (100) selon la Revendication 10, où le premier dispositif (100) est partagé entre une pluralité d'utilisateurs, le premier dispositif (100) possédant une pluralité de lecteurs de carte (120-1), chacune d'elles permettant à un utilisateur de rattacher une carte d'identification (10-1).
